**Europäisches Patentamt**

**European Patent Office**

**Office européen des brevets**

(19)

(11) Veröffentlichungsnummer: **0 082 327**

**A1**

(12) ## EUROPÄISCHE PATENTANMELDUNG

(21) Anmeldenummer: **82110789.3**

(22) Anmeldetag: **23.11.82**

(51) Int. Cl.³: **B 65 G 47/10**

(30) Priorität: **22.12.81 DE 3150817**

(43) Veröffentlichungstag der Anmeldung:
**29.06.83 Patentblatt 83/26**

(84) Benannte Vertragsstaaten:
**AT BE CH DE FR GB IT LI LU NL SE**

(71) Anmelder: **Köttgen GmbH & Co. KG
Paffratherstrasse 79-131
D-5070 Bergisch Gladbach(DE)**

(72) Erfinder: **Gronau, Jürgen
Sander Strasse 112
D-5060 Bergisch Gladbach 2(DE)**

(74) Vertreter: **Selting, Günther, Dipl.-Ing. et al,
Deichmannhaus am Hauptbahnhof
D-5000 Köln 1(DE)**

(54) **Regallager.**

(57) Bei einem Regallager sind Kommissionierplätze (28), an denen die aus den Regalen (23) entnommenen Waren miteinander kombiniert und zu Warengruppen neugeordnet (kommissioniert) werden, derart angeordnet, daß sie von allen Regalförderzeugen, die auf Schienen in dem Regallager fahren, erreicht werden können. Die einzelnen Waren werden aus den Regalen (23) zu dem Kommissionierplatz (28) gebracht. Die verbleibenden Waren werden anschließend von dem Regalförderzeug wieder ins Regal zurückgebracht.

FIG.3

EP 0 082 327 A1

Regallager
----------

Die Erfindung betrifft ein Regallager mit einer Fördereinrichtung mit schienengebundenen Regalförderzeugen, welche ein Hubgerät mit einem Lastenträger aufweisen, und mit einem zusammenhängenden Schienensystem aus mindestens einem Hauptweg und einem von dem Hauptweg über Weichen abzweigenden Zweigwegen.

Bekannt sind Regallager (DE-AS 21 00 854), bei denen die Regalförderzeuge durch Führungsschienen oder durch Fahr- und Führungsschienen entlang bestimmter Wege fahren. Das Schienensystem besteht aus parallelen Unterschienen und Oberschienen. Die Regalförderzeuge weisen untere Laufwerke auf, die mit den unteren Schienen zusammenwirken, und obere Laufwerke, die mit den Oberschienen zusammenwirken. An den Verzweigungsstellen des Schienensystems befinden sich Weichen, die fest oder beweglich sind. Im einen Falle weisen die Laufwerke der Flurförderzeuge steuerbare Eingriffsteile auf, die bei Erreichen einer Weiche die einzuschlagende Richtung bestimmen. Die Regalförderzeuge können auf einem der Zweigwege in die Gasse zwischen zwei Regalen fahren. Im anderen Falle bestimmen die beweglichen Teile der Weiche die einzuschlagende Richtung. Wenn die vorgesehene Stelle erreicht ist, wird der Lastenträger an dem Hubgerüst in die vorgesehene Höhe gefahren, so daß eine in dem betreffenden Regal abgelegte Palette gezielt angesteuert und entnommen werden kann.

Bei der Zusammenstellung (Kommissionierung) von Warengruppen ist es erforderlich, an verschiedenen Stellen des Regallagers kleinere Warenmengen zu entnehmen und diese zu der Warenguppe zusammenzustellen. Diese Kommissionierung erfolgt bei dem bekannten Warenlager dadurch, daß ein Regalförderzeug die einzelnen Stellen bzw. Regale, aus denen Waren entnommen werden, nacheinander ansteuert. Aus den Regalen werden dann die einzelnen Waren in der jeweils benötigten Menge manuell entnommen und auf dem Lastenträger abgestellt. Wenn die Warengruppe an der letzten Anlaufstelle vervollständigt worden ist, fährt das Regalförderzeug zu einem Umschlagplatz, um die kommissionierte Warengruppe abzuliefern.

Bekannt sind ferner Regallager, bei denen in jeder Regalgasse zwischen zwei Regalen ein fahrbares Regalförderzeug eingesetzt ist. Dabei ist an den Enden zweier benachbarter paralleler Regalgassen zwischen diesen Gassen ein Kommissionierungsplatz angeordnet, den die in diesen beiden Gassen fahrenden Förderzeuge anlaufen können. Mit den Regalförderzeugen werden die Waren aus den Regalen entnommen und dem Kommissionierplatz zugeführt, wo sie zu Gruppen zusammengestellt (kommissioniert) werden. Dieses bekannte Regallager hat den Nachteil, daß jeweils ein Kommissionierplatz für zwei Regalgassen vorgesehen werden muß. Wenn zu der zusammenzustellenden Warengruppe auch eine Ware gehört, die nur von einer anderen Regalgasse aus zugänglich ist, ist ein mehrmaliges Kommissionieren erforderlich.

Schließlich ist es bekannt, in den parallelen Regalgassen Schienen vorzusehen, die außerhalb der Regale enden. Durch eine quer zu den Schienen verfahrbare Umsetzeinrichtung, die nach Art einer Brücke ausgebildet ist, können die Regalförderzeuge von der Schiene einer Regalgasse auf die Schiene einer anderen Regalgasse umgesetzt werden. Auf diese Weise benötigt man nicht für jede Regalgasse ein eigenes Regalförderzeug. Bei einem derartigen Umsetzsystem erfolgt die Kommissionierung auf dem Lastenträger des Regalförderzeuges.

Diese bekannten Regallager erfordern für die Kommissionierung einer Warengruppe das manuelle Entnehmen der betreffenden Waren bzw. Warenteilmengen aus den einzelnen Regalen bzw. die Zusammenstellung der Warengruppe durch manuelles Eingreifen in das Regal. Dies ist nachteilig, weil die Bedienungsperson die Kommissionierarbeiten zwischen den Regalen, also unter ungünstigen Platz- und Lichtverhältnissen durchführen muß. Diese Nachteile sind besonders schwerwiegend, wenn mehrere gleiche oder ähnliche Warengruppen zusammengestellt werden müssen, weil hierzu häufig die Platzverhältnisse auf den Regalförderzeugen nicht ausreichen.

Weiterhin ist bekannt, die aus den Regalen entnommenen Waren an den Enden der Regalgassen auf Rollenbahnen abzusetzen und sie damit Entnahmeplätzen zuzuführen. Da die Rückführung in das Regal sehr aufwendig ist, wird dieses System meist nur für die Auslagerung ganzer Lagereinheiten und nicht für Teilmengen angewendet.

Der Erfindung liegt die Aufgabe zugrunde, ein Regallager der eingangs genannten Art derart auszubilden, daß die Möglichkeit besteht, die Regalförderzeuge auch unbemannt fahren zu lassen oder, sofern sie bemannt sind, den Fahrer von Kommissionierungsarbeit zu entlasten.

Zur Lösung dieser Aufgabe ist erfindungsgemäß vorgesehen, daß an mindestens einer Stelle des Schienensystems ein Kommissionierungsplatz angeordnet ist, der von allen Regalförderzeugen aus erreichbar ist.

Die Förderzeuge entnehmen hierbei jeweils ganze Palettenladungen oder Teilmengen aus den Regalen und bringen sie einzeln zu dem Kommissionierplatz. Am Kommissionierplatz wird die benötigte Teilmenge von dem Lastenträger abgenommen und die restliche Ware wird anschließend entweder an ihren Regalplatz zurückgebracht oder an einen anderen freien Regalplatz gebracht. Die entsprechende Wegsteuerung der auf dem Schienensystem laufenden Regalförderzeuge kann durch einen Computer erfolgen, der die Wege für den Transport der Waren aus den Regalen zu dem Kommissionierplatz vorgibt und eine entsprechende Fahrsteuerung bewirkt und anschließend den Abtransport der Restmenge vom Kommissionierplatz zu einem freien Regalplatz veranlaßt.

Ein besonderer Vorteil besteht darin, daß bei dem erfindungsgemäßen Regallager Schwankungen der Größe des Warenbedarfs durch Einsatz von geparkten Regalförderzeugen ausgeglichen werden können. Insbesondere ist eine gute Bedienungsanpassung bei stoßweiser Nachfrage nach bestimmten Artikeln möglich. Weil an den Kommissionierplatz jeweils eine größere Menge von Artikeln gebracht wird, können dadurch, daß am Kommissionierplatz mehr Artikel entnommen werden als für den einzelnen Kommissioniervorgang erforderlich sind, zusätzliche Fahrten eingespart werden.

Von besonderer Bedeutung ist, daß an dem Kommissionierplatz die Zusammenstellung der Warengruppen unter guten Raum- und Lichtverhältnissen erfolgt. Die Kommissionierplätze befinden sich an hierfür besonders geeigneten Stellen. Sie sind fest im System, so daß sie auch mit entsprechenden Einrichtung, wie Stühlen, Tischen, Beleuchtungskörpern, Schreibmöglichkeiten u.dgl. versehen werden können. Sofern der Betrieb der Regalförderzeuge unbemannt erfolgt, kommt gewissermaßen die Ware zum Menschen, der am Kommissionierplatz bleibt und unter günstigen Betriebsbedingungen arbeitet. Aber selbst wenn die Regalförderzeuge bemannt sind, ergibt sich eine wirtschaftlichere Betriebsweise als bei den bekannten Regallagern, weil der Fahrer des Regalförderzeuges nicht mit Kommissionierarbeiten befaßt ist, so daß der Anteil der Standzeiten für das einzelne Regalförderzeug verringert wird.

Ein weiterer Vorteil besteht darin, daß die Anzahl der in Betrieb befindlichen Kommissionierplätze an die jeweiligen Erfordernisse angepaßt werden kann. Weitere Vorteile sind die Flexibilität der Lagerbetriebsführung, auch bei Störungsfällen, die einfache Durchführung beliebiger Umlagerungsvorgänge und die durch bessere Anpassungsmöglichkeiten innerhalb des Gesamtsystems bewirkte Erhöhung der Gesamtwirtschaftlichkeit.

Das erfindungsgemäße Regallager kann entweder im Stichverkehr oder im Rundverkehr betrieben werden. Stichverkehr bedeutet, daß die in den Regalgassen verlaufenden Zweigwege Sackgassen sind, d.h. an ihren Ende aufhören. Beim Rundverkehr ist jedes der Regale von einer geschlossenen Schienenschleife umgeben. Der Rundverkehr eignet sich insbesondere für Regallager mit hoher Entnahmefrequenz, da er die Möglichkeit bietet, eine größere Anzahl von Regalförderzeugen einzusetzen, die sich gegenseitig nicht behindern.

Im folgenden werden unter Bezugnahme auf die Zeichnungen Ausführungsbeispiele der Erfindung näher erläutert.

Es zeigen:

Fig. 1  eine Seitenansicht eines Regalförderzeuges mit oberen und unteren Laufwerken,

Fig. 2  eine Frontansicht des Regalförderzeuges nach Fig. 1,

Fig. 3  eine Draufsicht einer Schienenführung in einem Regallager,

Fig. 4  ein weiteres Ausführungsbeispiel einer Schienenführung in einem Regallager und

Fig. 5  ein drittes Ausführungsbeispiel einer Schienenführung in einem Regallager.

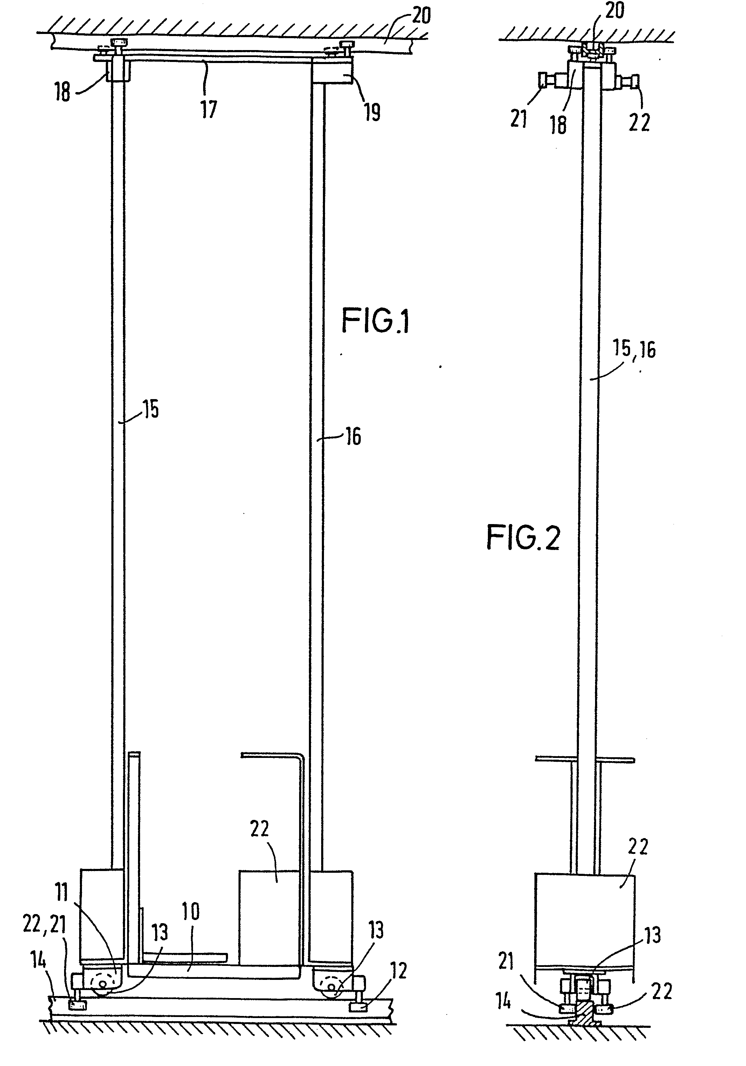

Das in den Fig. 1 und 2 dargestellte Regalförderzeug weist einen Rahmen 10 auf, an dessen beiden Enden je ein Laufwerk 11,12 angeordnet ist. Die Laufwerke 11,12 sind unter dem Rahmen 10 um vertikale Achsen schwenkbar montiert. Die Räder 13 der Laufwerke 11 und 12 laufen auf einer Schiene 14, die auf dem Boden des Regallagers fest installiert ist und den Weg des Regalförderzeugs vorgibt.

Von dem Rahmen 10 ragt ein Hubgerüst aus vertikalen Stangen 15,16 auf. Diese Stangen sind an ihren oberen Enden durch einen Längsholm 17 verbunden. An den Enden des Längsholmes 17 sind weitere Laufwerke 18 und 19 vorgesehen, deren Räder seitlich an einer oberen Schiene 20 angreifen, welche an der Decke des Regallagers genau über der unteren Schiene 14 montiert ist.

Die Laufwerke 11,13 und 18,19 weisen jeweils zwei Führungsrollen 21,22 auf, von denen jede an einer Seite der zugehörigen Schiene 14 bzw. 20 angreift. Die Führungsrollen 21,22 können gesteuert von der Schiene 14 bzw. 20 abgeschwenkt werden, um bei Erreichen einer Weiche eine Fahrtrichtungssteuerung vorzunehmen. Hierbei sind die Führungsrollen 21,22 der übereinanderliegenden Laufwerke 11,18 und die Führungsrollen der übereinanderliegenden Laufwerke 12,19 jeweils gleichzeitig betätigt, so daß die Richtungssteuerung an den Weichen der unteren Schiene 14 und den Weichen der oberen Schiene 20 gleichzeitig und in gegenseitiger Übereinstimmung erfolgt.

Entlang der vertikalen Stangen 15,16 des Regalförderzeuges ist eine Hubplattform 22 in vertikaler Richtung verfahrbar angeordnet. Diese Hubplattform 22 dient zum Erreichen unterschiedlicher Höhen eines Regales. Auf ihr kann eine Bedienungsperson stehen. Das Regalförderzeug kann aber auch so ausgebildet sein, daß von der Hubplattform 22 aus ein selbsttätiger Eingriff in das Regal erfolgt, beispielsweise durch eine seitlich ausfahrbare Gabel, die unter eine Palette, auf der Gegenstände gestapelt werden können, greift.

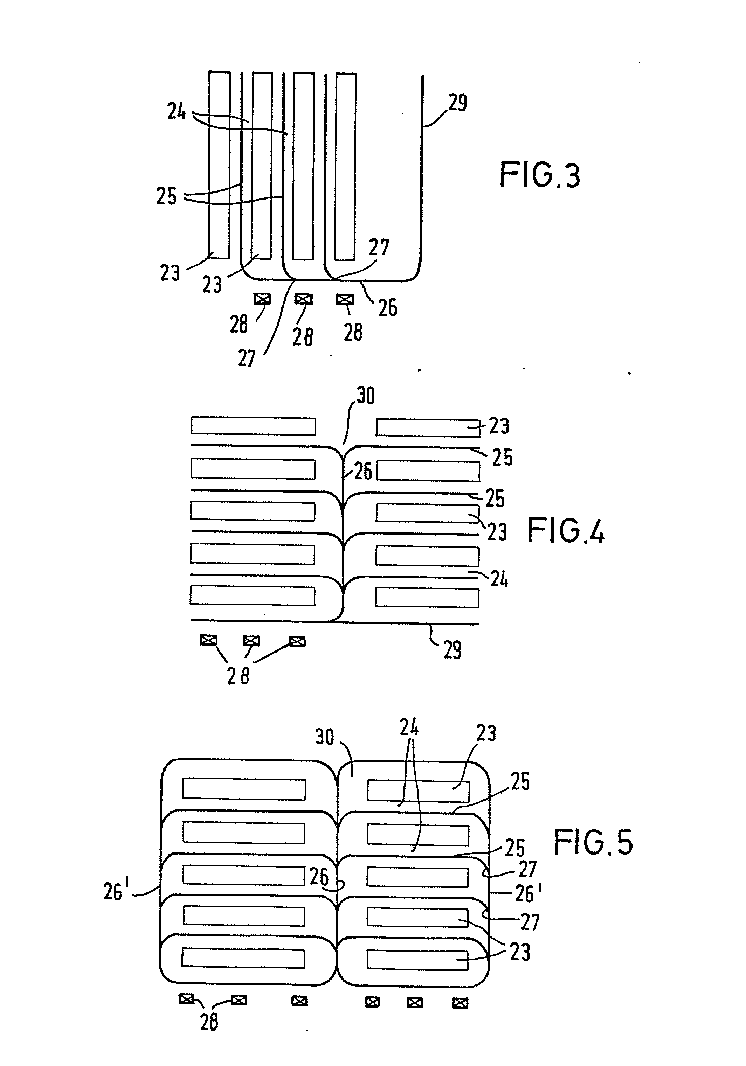

In Fig. 3 ist ein Regallager in Draufsicht dargestellt. Dieses Regallager weist vier parallele Regale 23 auf, die mit gegenseitigen Abständen angeordnet sind und zwischen denen sich die Regalgassen 24 befinden, in die das Regalförderzeug der Fig. 1 und 2 einfahren kann. Zu diesem Zweck führen in die Regalgassen 24 Schienenwege 25 hinein, die jeweils aus einer Unterschiene 14 und einer Oberschiene 20 (Fig. 1 und 2) bestehen. Die Schienenwege 25 sind als

Zweigwege ausgebildet. Sie enden an einem Ende der betreffenden Regalgasse. An den anderen Enden der Regalgassen führen die Schienenwege 25 auf einen Hauptweg 26, der quer zu den Zweigwegen 24 verläuft. Die Zweigwege 24 sind an den Hauptweg 26 über Weichen 27 angebunden, so daß jedes der Regalförderzeuge von dem Hauptweg 26 aus jeden der Zweigwege 25 erreichen kann.

Längs des Hauptweges 26 sind bei dem vorliegenden Ausführungsbeispiel drei Kommissionierplätze 28 angeordnet. Dies sind Plätze, an denen eine Bedienungsperson die Waren, die von den Flurförderzeugen aus den Regalen 23 entnommen werden, zu Warengruppen zusammenstellt. Das Zusammenstellen der Warengruppen erfolgt also nicht auf den Regalförderzeugen, sondern außerhalb der Regalgassen im Zuge des Hauptweges, der von allen Regalförderzeugen und von jeder Stelle des Regallagers aus erreichbar ist. Der Hauptweg 26 ist durch einen Abstellweg 29 verlängert, um Regalförderzeuge, die bei geringem Warenbedarf nicht benötigt werden, vorübergehend abstellen zu können.

Bei dem Ausführungsbeispiel von Fig. 4 sind die Regale 23 in zwei Reihen angeordnet. Jede Reihe enthält eine Anzahl paralleler Regale mit dazwischen vorgesehenen Regalgassen, in die die Zweigwege 24 des Schienensystems hineinführen. Zwischen den beiden Regalgruppen befindet sich ein Hauptgang 29, in dem der Hauptweg 26 des Schienensystems verläuft. Von dem Hauptweg 26 führen nach beiden Seiten hin über Weichen die Zweigwege 24 ab. Außerhalb des Hauptganges 30 sind längs des Hauptweges 26 des Schienensystems mehrere Kommissionierplätze 28 angeordnet. Außerdem führt von dem Hauptweg 26 ein Abstellweg 29 für vorübergehend nicht benötigte Regalförderzeuge ab.

Bei dem Ausführungsbeispiel der Fig. 5 sind die Regale 23 in gleicher Weise angeordnet wie bei dem Ausführungsbeispiel nach Fig. 4, jedoch sind die in den Regalgassen 24 verlegten Zweigwege 25 keine "Einbahnstraßen", sondern sie sind an den äußeren Enden der Regalgassen 24 durch weitere Hauptwege 26' und durch Weichen 27 miteinander verbunden, so daß jedes der Regale 23 von einer geschlossenen Schienenschleife umgeben ist. Längs der Hauptwege 26 oder 26' sind die Kommissionierplätze 28 angeordnet.

Die in dem System verwendeten Weichen können feste oder bewegbare Weichen sein. Im ersten Falle erfolgt die Einstellung des Fahrweges an dem Regalförderzeug, im zweiten Falle dagegen an der Weiche.

ANSPRÜCHE

1.  Regallager mit einer Fördereinrichtung mit schienengebundenen Regalförderzuegen, welche ein Hubgerüst
    mit einem Lastträger aufweisen und mit einem zusammenhängenden Schienensystem aus mindestens einem Hauptweg
    und von diesem Hauptweg über Weichen abzweigenden
    Zweigwegen, d a d u r c h   g e k e n n z e i c h -
    n e t ,  daß an mindestens einer Stelle des Schienensystems ein Kommissionierplatz (28) angeordnet ist,
    der für alle Regalförderzeuge erreichbar ist.

2.  Regallager nach Anspruch 1, dadurch gekennzeichnet,
    daß der Kommissionierplatz (28) an einem der Hauptwege (26,26') des Schienensystems angeordnet ist.

3.  Regallager nach Anspruch 1 oder 2, dadurch gekennzeichnet, daß jedes der Regale (23) von einer ge-
    schlossenen Schienenschleife umgeben ist.

-1/2-

0082327

FIG.1

FIG.2

FIG.3

FIG.4

FIG.5

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | COMPUTER DESIGN, Band 16, Nr. 10, Oktober 1977, Seiten 54,58,62,63,66 "Computer-directed warehouse system relieves personnel by locating parts and maintaining paperwork" * Insgesamt * | 1 | B 65 G 47/10 |
| A | US-A-3 734 229 (COMER) * Spalte 3, Zeilen 33-40; Spalte 4, Zeilen 2-14; Figur 1 * | 2,3 | |
| A | GB-A-1 091 858 (FERRANTI) | | |
| A | FR-A-2 002 662 (LICENTIA PATENT-VERWALTUNGS GmbH) | | |
| A | FÖRDERN UND HEBEN, Band 22, Nr. 5, April 1972, Seiten 219-222, Frankfurt, DE. H.T. OBERING: "Kommissionieren in Hochregallagern - Prinzipien und Methoden" | | |

RECHERCHIERTE SACHGEBIETE (Int. Cl. ³)

B 65 G
G 06 F
G 05 D
B 61 L

Der vorliegende Recherchenbericht wurde für alle Patentansprüche erstellt.

| Recherchenort DEN HAAG | Abschlußdatum der Recherche 14-03-1983 | Prüfer OSTYN T.J.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82